# EUROPÄISCHE PATENTSCHRIFT

(11) **EP 1 764 565 B1**
(45) Veröffentlichungstag und Bekanntmachung des Hinweises auf die Patenterteilung: **02.01.2008**
(21) Anmeldenummer: 06002606.9
(22) Anmeldetag: 09.02.2006
(51) Int. Cl.: F24J 2/10

(54) **Verfahren zur Herstellung eines optischen Spiegels**
Method of producing an optical mirror
Procédé de fabrication d'un miroir optique

(30) Priorität: 15.09.2005 DE 102005044241
(43) Veröffentlichungstag der Anmeldung: 21.03.2007
(73) Patentinhaber: NOVATEC BioSol AG, 76227 Karlsruhe (DE)
(72) Erfinder: Selig, Martin, 76137 Karlsruhe (DE); Mertins, Max, 79106 Freiburg (DE)
(74) Vertreter: Geitz Truckenmüller Lucht

(56) Entgegenhaltungen:
- CA-A1- 2 237 882
- DE-A1- 2 945 908
- DE-A1- 19 619 021
- FR-A- 2 391 420
- GB-A- 1 308 173

## Beschreibung

Die Erfindung betrifft ein Verfahren zur Herstellung eines optischen Spiegels, insbesondere für einen Solarkollektor, wobei eine Spiegelscheibe, welche eine Reflexionsseite und eine Klebeseite aufweist, auf eine Trägerkonstruktion aufgebracht wird und die Spiegelscheibe mit ihrer Reflexionsseite auf eine Sollform aufgezogen wird.

Ein solches Verfahren ist, wenn auch zur Herstellung eines Parabolspiegels aus der DE 196 19 021 A1 grundsätzlich bekannt. Der Parabolspiegel unterscheidet sich von den für Solarkollektoren üblichen Spiegelformen dadurch, dass mittels des Parabolspiegels eine Punktfokussierung der reflektierten Strahlung angestrebt wird, während bei einem Solarkollektor mittels der Spiegelkonstruktion die reflektierte Strahlung eher auf einen beabstandeten längserstreckten Receiver fokussiert wird also eine Linienfokussierung der reflektierten Strahlung angestrebt wird.

Bei dem vorbekannten Verfahren wird die zunächst noch plane Spiegelscheibe mit ihre Reflexionsseite auf die gekrümmte Paraboloidfläche, also eine konvexe Sollform gelegt. Die Ausrichtung der Spiegelfläche relativ zur Sollform kann in dem hier vorliegenden Spezialfall der Herstellung eines Parabolspiegels einfach dadurch erfolgen dass der Mittelpunkt der Spiegelfläche auf den Mittelpunkt der Paraboloidfläche gelegt wird. Anschließend wird die Trägerkonstruktion, hier bestehend aus einem am Außenumfang der Spiegelfläche angesetzten ringförmigen Rahmen unter Zwischenlage wenigstens eines mit der Spiegelfläche zu verklebenden Fixierrings, der einen deutlich reduzierten Durchmesser gegenüber dem ringförmigen Rahmen aufweist, jeweils unter Zwischenlage eines geeigneten Klebmittels auf die Sigelfläche gepresst. Die elastische Spiegelfläche wird dabei auf die gekrümmte Paraboloidfläche gepresst. Sobald der Kleber ausgehärtet ist, ist der Spiegel mit der Tragkonstruktion verbunden und gemäß der Sollvorgabe der konvexen Paraboloidfläche der Sollform konkav gekrümmt.

Die Anzahl der Fixierringe kann in Abhängigkeit vom Durchmesser des zu fertigenden Parabolspiegels erhöht werden.

Aus der DE 29 45 908 A1 ist ein weiteres Verfahren zur Herstellung von konkav gekrümmten Spiegeln bekannt, das im übrigen auch zur Herstellung von Spiegel geeignet ist, die auch in Linearanordnungen einsetzbar sind. Auch hier werden zunächst plane weiche Spiegelplatten über eine entsprechende Form gewölbt und in dieser Form mit wenigstens einer weiteren weichen verformbaren Platte verklebt und ausgehärtet. Die Spiegelplatte in Verbindung mit der weiteren Platte sollen dann zusammen die erforderliche Steifigkeit besitzen wobei während des Aushärtens des Klebers die konvexe Form der Sollform in die Spiegelfläche eingeprägt wurde. Das Ergebnis dieses Verfahrens ist ein Spiegel mit konkaver Krümmung.

Die Einheit aus Spiegel und Trägerkonstruktion wird im Weiteren als Heliostat bezeichnet.

Solche konzentrierenden Solarkollektoren sind bereits seit langem bekannt. Gewöhnlich werden diese dadurch hergestellt, dass eine Spiegelfolie auf einer Trägerkonstruktion aufgeklebt wird. Ein solches Verfahren ist auch in der DE 38 32 961 A1 beschrieben. Der Erfindung lag dabei die Aufgabe zu Grunde, ein Verfahren zu finden, mittels dessen eine Verklebung bestimmter Foliensorten, die zuvor nicht zu verkleben waren, ermöglicht wird.

Dies gelingt dadurch, dass die zu verwendenden Folien zunächst durch Hitzeeinwirkung angeschmolzen werden, dann mit einem Kleber versehen und schließlich durch Aufeinanderpressen der Folienflächen in Kontakt gebracht werden. Die auf diese Weise in ihrem Zuschnitt auf eine Unterfläche aufgebrachte Folie wird anschließend auf eine Trägerkonstruktion montiert, welche im Wege einer Feinjustierung auf die Erfordernisse angepasst wird.

Solarthermische Kraftwerke arbeiten üblicherweise mit einer Spiegelanordnung und einem Wärmeaufnehmer, dem so genannten Receiver. Hier unterscheidet man zwischen einachsig und zweiachsig nachgeführten Systemen. Die Heliostaten des Heliostatenfeldes werden mithilfe von Motoren so geführt, dass darauf einfallendes Sonnenlicht reflektiert und auf den über den Spiegeln erhöht situierten Receiver gelenkt wird. Der Receiver weist bei einem einachsigen System ein oder mehrere Absorberrohre auf, bei einem zweiachsigen System ein Rohrbündel oder einen volumetrischen Absorber auf. Dieser absorbiert die durch die Heliostaten konzentrierte Solarstrahlung und leitet mithilfe eines hindurchströmenden Mediums diese in Wärme umgewandelte Energie weiter. Im Laufe des Tages werden die Heliostaten je nach Sonnenstand so nachgeführt, dass das Sonnenlicht stets auf den Receiver einfällt.

Unter anderem werden solche Heliostaten so gefertigt, dass ihre Trägerkonstruktion der Sollform des Spiegels möglichst genau entspricht und der Spiegel selbst auf dieser Konstruktion befestigt wird, so dass sich seine Sollform einstellt. Die Spiegelscheibe selbst wird bei geringer Krümmung durch eine elastische Zwängung, bei größeren Krümmungen auch durch thermische Verformung in die benötigte Form gebracht.

Die richtige Lenkung des Sonnenlichts erfordert eine sehr große Genauigkeit bei der Herstellung der verwendeten Heliostaten. Die Spiegel weisen je nach Entfernung zum Receiver eine bestimmte Krümmung auf. Um einen möglichst hohen Ertrag zu erreichen, ist es erforderlich, dass die Krümmungsparameter der Spiegelfläche möglichst exakt eingehalten werden. Problematisch ist dabei, dass die Herstellung eines so genauen Spiegels technisch bislang nur mit sehr großem Aufwand realisierbar war, da schon die Trägerkonstruktion diesen Genauigkeitsanforderungen genügen musste.

Daher ist die Lösung bekannt, einen Spiegel mit mittelmäßiger Genauigkeit herzustellen und diesen im Wege der Feinjustage genau anzupassen. Diese Methode stellt sowohl große Anforderungen an das Material der Trägerkonstruktion, als auch an die Techniker, welche die Feinjustage durchführen.

Es ist notwendig, an der Trägerkonstruktion einzelne einstellbare Punkte zu definieren, die sich über Justageschrauben feinabstimmen lassen. Für die optimale Einstellung der Kollektoren ist der Einsatz von Fachpersonal erforderlich, was große Kosten verursacht.

Der insoweit zu beachtenden Stand der Technik wird beispielsweise durch die CA 2 237 882 A1 repräsentiert. Diese Schrift lehrt die Anpassung der Verformung einer Spiegelscheibe durch eine Vielzahl von Justierschrauben die senkrecht zur Erstreckungsebene der Spiegelfläche in einem Tragwerk des Spiegels angeordnet sind und so die Feinjustage der Spiegelkrümmung vor Ort ermöglichen, bis die gewünschte Fokussierung der reflektierten Strahlung erreicht wird.

Gerade in Zeiten steigender Energiekosten entwickeln sich Solarthermische Kraftwerke zu einer lohnenswerten Alternative zu fossilen Brennstoffen.

Daher liegt der Erfindung die Aufgabe zugrunde, ein Verfahren zur Herstellung eines eine Krümmung aufweisenden optischen Spiegels bereitzustellen, das ohne Einbußen an Genauigkeit auf eine Feinjustage der Spiegel nach deren Herstellung verzichten kann und das eine preiswerte massenhafte Herstellung solcher Spiegel ermöglicht.

Gelöst wird diese Aufgabe mithilfe des Verfahrens gemäß den Merkmalen des Hauptanspruchs. Sinnvolle Ausgestaltungen dieses Verfahrens können den Unteransprüchen entnommen werden.

Erfindungsgemäß wird zur Herstellung eines eine Krümmung aufweisenden optischen Spiegels, insbesondere eines Heliostaten für einen konzentrierenden Solarkollektor, eine Spiegelscheibe verwendet, welche auf eine Sollform aufgebracht wurde. Dabei befindet sich die reflektierende Seite in Anlage zu der Sollform. Die Sollform stellt einen Abdruck der für den jeweiligen Spiegel idealen Krümmung dar, so dass durch die direkte Anlage der Scheibe an die Sollform die Spiegelscheibe ebenfalls in ihre endgültige Form, insbesondere in ihre endgültige Krümmung gebracht wird.

Damit die Spiegel, aus welchen das Solarthermische Kraftwerk besteht, der Sonne nachgeführt werden können, werden sie auf Trägerkonstruktionen aufgebaut, welche so schwenkbar sind, dass stets die größtmögliche Energie an den Receiver weitergeleitet wird. Die Spiegelscheibe wird unter Zwischenlage von Klebemittel auf die Trägerkonstruktion aufgesetzt. Dabei verbleibt die Scheibe an der Sollform, so dass sie ihre ideale Form beibehält. Das plastische Klebemittel verbindet die Scheibe mit der Trägerkonstruktion, so dass die Scheibe nach dem Erhärten des Klebemittels in ihrer aktuellen Position gehalten ist.

Es hat sich als vorteilhaft erwiesen, wenn zunächst die Trägerkonstruktion mit Klebemittel versehen und anschließend die Spiegelscheibe in das Klebemittel hinein gedrückt wird. Das Klebemittel weicht aus, während die Spiegelscheibe in enger Anlage formschlüssig auf der Sollform aufgenommen ist und diese Form durch die Stützung der Sollform auch beibehält. In dieser Lage verbleibt die Spiegelscheibe mit der Sollform zumindest bis das Klebemittel wenigstens annähernd ausgehärtet ist. Nach dem Entfernen der Sollform weist die Spiegelscheibe immer noch die Form der Sollform auf, welche der idealen Krümmung für den Spiegel weitestgehend entspricht.

Eine Applikation des Klebemittels, beispielsweise auf der Trägerkonstruktion muss nicht flächig erfolgen. Es genügt mithin, das Klebemittel an einzelnen Tragpunkten aufzutragen und somit die Scheibe nur an vorgegebenen Punkten zu halten. Dadurch wird einerseits Klebemittel eingespart und andererseits kann das vor dem Druck der aufgesetzten Spiegelscheibe ausweichende Klebemittel so in die Zwischenräume zwischen den Tragpunkten fließen.

Die starre Trägerkonstruktion muss durch das Verfahren nicht den hohen Genauigkeitsansprüchen der Sollform entsprechen, da die Toleranzen von dem Klebemittel ausgeglichen werden. Auch eine nachträgliche Feinjustage entfällt erfindungsgemäß, was eine zusätzliche Vereinfachung der Konstruktion darstellt und gleichzeitig zu einer Kosteneinsparung bei der Herstellung der Trägerkonstruktionen führt.

Begünstigt wird die Festigkeit der Spiegelscheibe zusätzlich dadurch, dass die Scheibe aus einem steifen, jedoch biegsamen Material besteht. Würde eine zu weiche Scheibe verwendet, so könnte eine nachträgliche Verformung, etwa an Stellen geringerer Stützung durch Tragpunkte, nicht endgültig vermieden werden.

Die vorstehend beschriebene Erfindung wird im Folgenden anhand einer Zeichnung näher erläutert.

Es zeigen:
- Figur 1: eine Trägerkonstruktion sowie eine auf eine Sollform aufgezogene Spiegelscheibe vor der Montage in einer Schnittbilddarstellung,
- Figur 2: eine Trägerkonstruktion mit einer aufgesetzten Spiegelscheibe, wobei die Sollform noch nicht entfernt ist in einer Schnittbilddarstellung, und
- Figur 3: einen fertigen Heliostaten, der nach dem erfindungsgemäßen Verfahren hergestellt ist, ebenfalls in einer Schnittbilddarstellung.

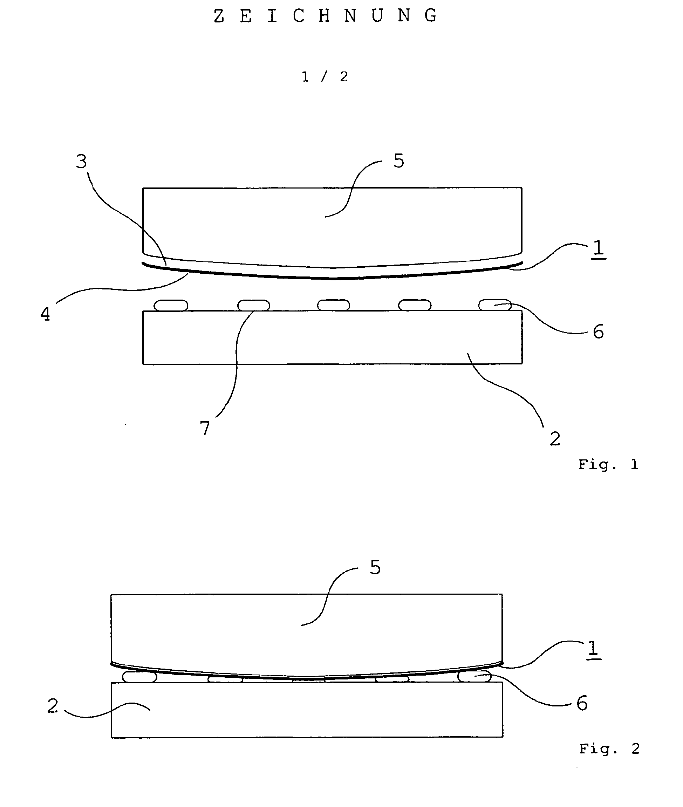

Figur 1 zeigt eine Trägerkonstruktion 2 zur Herstellung eines Heliostaten. Auf der Trägerkonstruktion 2 ist an einzelnen Tragpunkten 7 Klebemittel 6 appliziert. Im Vorfeld der Herstellung wurde eine Spiegelscheibe 1, welche eine Reflexionsseite 3 und eine Klebeseite 4 aufweist, auf eine Sollform 5 so aufgezogen, dass die Spiegelscheibe 1 exakt die Form der Sollform 5 auf ihrer Reflexionsseite 3 abbildet. In der Darstellung ist die Spiegelscheibe 1 von der Sollform 5 etwas beabstandet gezeichnet, um eine eindeutige Beschriftung zu gewährleisten. Tatsächlich ist die Spiegelscheibe 1 jedoch dicht anliegend auf die Sollform 5 aufgezogen.

Figur 2 zeigt den zweiten Schritt des Herstellungsverfahrens, in dem die Spiegelscheibe 1 mitsamt der Sollform 5 in das volle Klebemittel 6 hineingedrückt wird. Das Klebemittel 6 weicht dabei seitlich aus, so dass die Form der Spiegelscheibe 1 letztendlich auch in das Klebemittel 6 übertragen wird. Die Sollform 5 wird so lange auf der Spiegelscheibe 1 belassen, bis das Klebemittel 6 ausgehärtet ist und einerseits die Form der Spiegelscheibe 1 stützt und diese andererseits durch seine Klebkraft hält. Nach der Erhärtung des Klebemittels 6 kann die Sollform 5 entfernt werden, wobei die Spiegelscheibe 1 die von der Sollform 5 vorgegebene Krümmung beibehält.

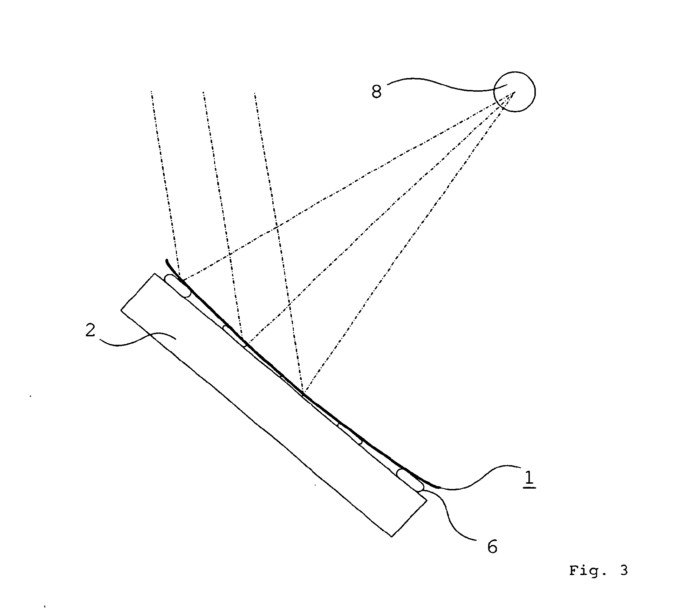

Figur 3 zeigt den fertigen Heliostaten, welcher das in der Figur gestrichpunktet gezeichnete Sonnenlicht auf einen Receiver 8 leitet. Es handelt sich dabei nur um eine Prinzipdarstellung, bei der zu berücksichtigen ist, dass einem Receiver 8 mehrere solcher Heliostaten zugeordnet sind. Die Trägerkonstruktion 2 ist in hier nicht weiter interessierender Weise schwenkbar, so dass die Anordnung dem Sonnenlicht derart nachführbar ist, dass stets die maximale Lichtausbeute dem Receiver 8 zugeleitet wird. Die Krümmung der Spiegelscheibe 1 ist durch ihre Sollform in Abhängigkeit von dem Abstand zwischen Heliostat und Receiver 8 vorgegeben.

Vorstehend ist somit ein Verfahren zur Herstellung eines optischen Spiegels, insbesondere für einen Sonnenkollektor, beschrieben, welches eine präzise und trotzdem schnelle und einfache Herstellung solcher Heliostaten ermöglicht. Erreicht wird dies durch die Verwendung einer Sollform, auf welche die auf eine Trägerkonstruktion aufzubringende Spiegelscheibe aufgezogen ist. Diese Scheibe wird mitsamt der Sollform unter Zwischenlage von Klebemittel auf die Trägerkonstruktion aufgebracht und erst nach Erhärten des Klebemittels und der damit verbundenen Konservierung der Spiegelform entfernt.

### BEZUGSZEICHENLISTE

- 1: Spiegelscheibe
- 2: Trägerkonstruktion
- 3: Reflexionsseite
- 4: Klebeseite
- 5: Sollform
- 6: Klebemittel
- 7: Tragpunkte

## Patentansprüche

1. Verfahren zur Herstellung eines eine Krümmung aufweisenden optischen Spiegels, insbesondere für einen Solarkollektor, wobei eine Spiegelscheibe (1), welche eine Reflexionsseite (3) und eine Klebeseite (4) aufweist, auf eine starre Trägerkonstruktion (2) aufgebracht wird,
**dadurch gekennzeichnet, dass** die Spiegelscheibe (1) mit ihrer Reflexionsseite (3) auf eine Sollform (5) aufgezogen wird und die Spiegelscheibe (1) mitsamt der Sollform (5) unter Zwischenlage eines Klebemittels (6) mit ihrer Klebeseite (4) auf die Trägerkonstruktion (2) aufgesetzt wird, wobei die Sollform (5) von der Spiegelscheibe (1) getrennt wird, wenn das Klebemittel (6) zumindest annähernd ausgehärtet ist, so dass nach dem Entfernen der Sollform (5) die Speigelscheibe (1) immer noch die Form der Sollform (5) aufweist.

2. Verfahren gemäß Anspruch 1, **dadurch gekennzeichnet, dass** die Spiegelscheibe (1) vor der Montage zumindest nahezu formschlüssig auf der Sollform (5) aufgenommen ist, das Klebemittel (6) auf die Trägerkonstruktion (2) appliziert wird und die Spiegelscheibe (1) mit der Klebeseite (4) flächig so in das Klebemittel (6) hineingedrückt wird, dass die Reflexionsseite (3) der Spiegelscheibe (1) wenigstens näherungsweise exakt die Oberfläche der Sollform (5) abbildet.

3. Verfahren gemäß Anspruch 2, **dadurch gekennzeichnet, dass** das Klebemittel (6) nur an einzelnen Tragepunkten (7) auf der Trägerkonstruktion (2) aufgetragen wird.

4. Verfahren gemäß einem der vorhergehenden Ansprüche, **dadurch gekennzeichnet, dass** die Spiegelscheibe (1) aus einem steifen, jedoch biegsamen Material besteht.

## Claims

1. A method for producing an optical mirror having a curvature, especially for a solar collector, with a mirror disk (1) which comprises a reflective side (3) and an adhesive side (4) being applied to a rigid support construction (2), **characterized in that** the mirror disk (1) is mounted with its reflective side (3) on a design form (5) and the mirror disk (1) together with the design form (5) is placed with its adhesive side (4) onto the support construction (2) by interposing an adhesive (6), with the design form (5) being separated from the mirror disk (1) when the adhesive (6) has cured at least to a substantial extent, so that after the removal of the design form (5) the mirror disk (1) still has the shape of the design form (5).

2. A method according to claim 1, **characterized in that** the mirror disk (1) is received prior to mounting at least in a virtually interlocking manner on the design form (5), the adhesive (6) is applied to the support construction (2) and the mirror disk (1) is pressed with the adhesive side (4) in a planar manner into the adhesive (6) in such a way that the reflective side (3) of the mirror disk (1) reflects the surface of the design form (5) in an at least approximately precise manner.

3. A method according to claim 2, **characterized in that** the adhesive (6) is only applied to individual support points (7) on the support construction (2).

4. A method according to one of the preceding claims, **characterized in that** the mirror disk (1) consists of a stiff, but flexible material.

## Revendications

1. Procédé pour fabriquer un miroir optique présentant une courbure, en particulier pour un collecteur solaire, un disque de miroir (1), qui présente un côté réflexion (3) et un côté adhésif (4), étant appliqué sur une construction porteuse (2) rigide,
**caractérisé en ce que** le disque de miroir (1) est étiré avec son côté réflexion (3) sous une forme prescrite (5) et le disque de miroir (1) est posé avec la forme prescrite (5) avec intercalage d'un agent adhésif (6) avec son côté adhésif (4) sur la construction porteuse (2), la forme prescrite (5) étant séparée du disque de miroir (1) lorsque l'agent adhésif (6) est durci au moins approximativement, de sorte que, après l'enlèvement de la forme prescrite (5), le disque de miroir (1) présente toujours la forme de la forme prescrite (5).

2. Procédé selon la revendication 1, **caractérisé en ce que** le disque de miroir (1) est réceptionné avant le montage au moins pratiquement par complémentarité de formes sur la forme prescrite (5), l'agent adhésif (6) est appliqué sur la construction porteuse (2) et le disque de miroir (1) est enfoncé avec le côté adhésif (4) en surface dans l'agent adhésif (6) de telle sorte que le côté réflexion (3) du disque de miroir (1) reproduit au moins approximativement exactement la surface de la forme prescrite (5).

3. Procédé selon la revendication 2, **caractérisé en ce que** l'agent adhésif (6) est appliqué seulement sur des points supports (7) individuels sur la construction porteuse (2).

4. Procédé selon l'une quelconque des revendications précédentes, **caractérisé en ce que** le disque de miroir (1) est à base d'un matériau rigide, mais flexible.
